Europäisches Patentamt

European Patent Office

Office européen des brevets

(11) Veröffentlichungsnummer: **0 001 625**
**B1**

(12) **EUROPÄISCHE PATENTSCHRIFT**

(45) Veröffentlichungstag der Patentschrift:
28.01.81

(51) Int. Cl.³: **C 08 L 55/02**, C 08 L 25/12

(21) Anmeldenummer: **78101148.1**

(22) Anmeldetag: **14.10.78**

(54) **Thermoplastische Formmassen.**

(30) Priorität: **26.10.77 DE 2747822**

(43) Veröffentlichungstag der Anmeldung:
**02.05.79 Patentblatt 79/9**

(45) Bekanntmachung des Hinweises auf die Patenterteilung:
**28.01.81 Patentblatt 81/4**

(84) Benannte Vertragsstaaten:
**BE DE FR GB NL**

(56) Entgegenhaltungen:
**DE-A-1 949 487**

(73) Patentinhaber: **BAYER AG, Zentralbereich Patente, Marken und Lizenzen, D-5090 Leverkusen 1, Bayerwerk (DE)**

(72) Erfinder: **Liebig, Lothar, Dr., Walter-Flex-Strasse 19, D-5090 Leverkusen 1 (DE)**
Erfinder: **Wingler, Frank, Dr., Walter-Flex-Strasse 17, D-5090 Leverkusen 1 (DE)**
Erfinder: **Ott, Karl-Heinz, Dr., Paul-Klee-Strasse 54, D-5090 Leverkusen 1 (DE)**
Erfinder: **Humme, Gert, Dr., Ackerstrasse 17, D-5068 Odenthal (DE)**
Erfinder: **Pischtschan, Alfred, Dr., Zur Eiche 33, D-5067 Kürten (DE)**

ACTORUM AG.

Thermoplastische Formmassen

Schlagfeste thermoplastische Formmassen kann man herstellen, indem man beispielsweise Styrol (S) und Acrylnitril (A) in Gegenwart von Polybutadien (B) polymerisiert («ABS-Polymerisate»). Durch Verwendung eines amorphen Polyolefins anstatt Polybutadien wird die Witterungsbeständigkeit erheblich verbessert, wenn das Polyolefin keine C=C-Bindungen in der Hauptkette enthält. Man verwendet z.B. EPDM-Kautschuke aus Äthylen (E), Propylen (P) und einem nichtkonjugierten Dien (D) und erhält «AES-Polymerisate», d.h. Thermoplasten, in denen Acrylnitril (A) und Styrol (S) auf einem EPDM-Kautschuk (E) pfropfpolymerisiert sind.

AES- und ABS-Kunststoffe bestehen i.a. aus zwei Phasen. Die kontinuierliche Phase ist ein Copolymerisat aus den aufgepfropften Monomeren, meist ein Styrol-Acrylnitril-Copolymerisat («SAN-Thermoplast»); die eingelagerte diskontinuierliche Phase ist das eigentliche Pfropfpolymerisat. Durch seine aufpolymerisierten Seitenketten («SAN-Hülle») ist es mit dem Copolymerisat verträglich.

So werden in der DE-OS 19 49 487 Mischungen von Pfropfpolymerisaten von Styrol und Acrylnitril auf einen Kautschuk mit einer Glastemperatur unter –30°C mit Copolymerisaten aus Styrol, Maleinsäureanhydrid und gegebenenfalls Acrylnitril beschrieben, die gegebenenfalls noch ein Copolymerisat aus Styrol und Acrylnitril (SAN-Harz) enthalten.

Gegenstand der Erfindung sind thermoplastische Formmassen aus
(A) 25–95 Gew.-% eines Pfropfpolymerisats von
70–30 Gew.-% eines Gemisches von Styrol
(95–50 Gew.-%) und Acrylnitril
(5–50 Gew.-%) auf
30–70 Gew.-% Polybutadien oder Butadien-Styrol-Copolymerisat, und
(B) 5–75 Gew.-% eines Terpolymerisats aus Acrylnitril, Maleinsäureanhydrid und Styrol,
dadurch gekennzeichnet, dass das Terpolymerisat
10–30 Gew.-Teile Acrylnitril
7,5–15 Gew.-Teile Maleinsäureanhydrid
82,5–55 Gew.-Teile Styrol
einpolymerisiert enthält und durch kontinuierliche Massepolymerisation in einem ideal durchmischten Tankreaktor unter stationären Bedingungen und bei unvollständigen Umsätzen von 25 bis 60 Mol-%, bei Raumzeitausbeuten von 200 bis 2000 g/l und bei Temperaturen von 60–150°C in Gegenwart von 0,01 bis 0,5 Gew.-%, bezogen auf Monomere, eines in Radikale zerfallenen Initiators mit einer Zerfallsgeschwindigkeitskonstanten bei 100°C von grösser als $5 \times 10^{-3}$ sek.$^{-1}$ hergestellt und in einer weiteren kontinuierlich betriebenen Verfahrensstufe von den Restmonomeren bis auf einen Gehalt von unter 0,1 Gew.-%, bezogen auf das Terpolymerisat, befreit worden ist.

Die erfindungsgemäss zu verwendenden Pfropfpolymerisate sind bekannt. Sie können erhalten werden durch Polymerisation von Styrol und Acrylnitril in Gegenwart des Kautschuks. Mindestens ein Teil des Styrols und Acrylnitrils ist dann auf den Kautschuk pfropfpolymerisiert. Daneben liegt in der Regel auch nichtgepfropftes Styrol-Acrylnitril-Copolymerisat vor. Die Pfropfcopolymerisate können in bekannter Weise durch radikalische Polymerisation von Styrol und Acrylnitril in Gegenwart des Kautschuks in Substanz, Emulsion, Suspension oder Lösung sowie durch kombinierte Verfahren wie Masse/Suspensionspolymerisation oder Lösungs-/Fällungs-Polymerisation erhalten werden.

Als Kautschuk kommen in Frage:
Polybutadien und Copolymerisate aus Butadien und Styrol mit bis zu 30 Gew.-% einpolymerisiertem Styrol.

Pfropfpolymere auf Basis von Polybutadien werden durch Polymerisation der Monomeren wie Styrol und Acrylnitril in Anwesenheit eines Latex des Butadienpolymerisats hergestellt. Die Polymerteilchen in dem Latex des Butadienpolymerisats weisen im allgemeinen eine Grösse im Bereich von 0,2 bis 5 μ auf. Es ist auch möglich, Pfropfpolymerisate nach der Emulsionspolymerisation zu erzeugen, bei denen die Polymerteilchen eine Grösse im Bereich von 0,05–0,8 μ aufweisen. Die Herstellung der erfindungsgemäss zu verwendenden Pfropfpolymeren ist nicht an das Verfahren der Emulsionspolymerisation gebunden. Die Pfropfpolymerisate können auch dadurch erhalten werden, indem man den Kautschuk in den Monomeren löst, beispielsweise in Styrol und Acrylnitril, die Polymerisation durch Erhitzen und Zugabe von Radikalbildnern auslöst, nach einem bestimmten Monomerumsatz durch Zugabe von Wasser eine Suspension erzeugt und als Perlpolymerisation die Reaktion zu Ende führt. Solch eine Verfahrensweise ist beispielsweise in der deutschen Patentschrift DE-AS 1 245 131 beschrieben.

Das Terpolymerisat aus Styrol, Acrylnitril und Maleinsäureanhydrid wird unter stationären Bedingungen durch eine kontinuierlich durchgeführte Massepolymerisation hergestellt.

Stationäre Bedingungen bedeutet: die Konzentration sämtlicher Reaktionsteilnehmer und die Zusammensetzung der gebildeten Produkte bleiben über die Zeitdauer der Polymerisation praktisch konstant. Stabile stationäre Zustände stellen sich in dem Tankreaktor nach etwa 0,5 bis 24 Stunden ein, gemessen vom Beginn der Fahrperiode an. Bei der kontinuierlichen Polymerisation unter stationären Bedingungen sind differentielle und integrale Zusammensetzungen der Polymerisate gleich, so dass chemisch einheitliche Terpolymerisate gebildet werden, d.h., die Fraktionen eines Terpolymerisats unterscheiden sich in ihrer chemischen Zusammensetzung nur unerheblich voneinander.

Von einer idealen Durchmischung in dem Tankreaktor wird gesprochen, wenn die Einmischzeit kleiner ist als $^1/_{10}$ der mittleren Verweilzeit. Die mittlere Verweilzeit kann 10 bis 240 Min., vorzugsweise 20–120 Min., und die Einmischzeiten 5–120 Sek., vorzugsweise 5–30 Sek. betragen.

Die für die kontinuierliche Polymerisation im Tankreaktor verwendeten Initiatoren haben bei 100°C eine Zerfallsgeschwindigkeitskonstante (k) von grösser als $5 \times 10^{-3}$ sek.$^{-1}$. Als Initiatoren, bei Polymerisationstemperaturen von 60 bis 150°C, werden beispielsweise verwendet:

| | | |
|---|---|---|
| Tert.-Butylperoctoat | $k = 5,0 \cdot 10^{-3}$ sek.$^{-1}$ | bei 100°C |
| Benzoylperoxid | $k = 5,2 \cdot 10^{-3}$ sek. | bei 100°C |
| Laurylperoxid | $k = 2,2 \cdot 10^{-2}$ sek. | bei 100°C |
| Tert.-Butylperpivalat | $k = 3,2 \cdot 10^{-2}$ sek. | bei 100°C |
| Isopropyl-peroxydicarbonat | $k = 1,4 \cdot 10^{-1}$ sek. | bei 100°C |
| 2-Äthylhexyl-peroxydicarbonat | $k = 2,1 \cdot 10^{-1}$ sek. | bei 100°C |
| Acetylcyclohexyl-sulfonylperoxid | $k = 10 \cdot 10^{-1}$ sek. | bei 100°C |

Die Initiatoren werden in Mengen von 0,01 bis 0,5 Gew.-%, bezogen auf Monomeren, eingesetzt.

Für die erfindungsgemässen Formmassen sind besonders Terpolymerisate geeignet, deren Acrylnitrilgehalt im Bereich des Acrylnitrilgehaltes der Pfropfpolymerisate liegen.

Zur Herabsetzung des Molekulargewichts können noch Kettenabbruchs- oder Übertragungsmittel wie n- oder tert.-Dodecylmercaptan, Thioglykol, Thioglycerin, Cyclohexan, Allylalkohol, etc. in Mengen von 0,1 bis 2 Gew.-%, bezogen auf Monomere, eingesetzt werden.

Das Verhältnis der Monomeren in der Ausgangsmonomermischung ist so zu wählen, dass bei dem gewünschten Umsatz ein Polymerisat mit der beanspruchten Bruttozusammensetzung entsteht. Man kann die dazu notwendige Ausgangsmonomerzusammensetzung durch Versuche ermitteln, indem man sie so lange variiert, bis das Terpolymerisat der gewünschten Bruttozusammensetzung innerhalb der beanspruchten Grenzen entsteht. So liefert die kontinuierliche Polymerisation eines Gemisches aus 74 Gew.-% Styrol, 22 Gew.-% Acrylnitril und 4 Gew.-% Maleinsäureanhydrid bei einem stationären Umsatz von 35% ein Terpolymerisat, das den erfindungsgemässen Formmassen ausgezeichnete thermische und mechanische Eigenschaften verleiht. Dagegen entsteht aus der gleichen Monomermischung bei diskontinuierlicher Mischpolymerisation ein ungeeignetes Polymerisat.

Die aus dem Tankreaktor austretende Polymerisatlösung wird in einer weiteren kontinuierlich betriebenen Verfahrensstufe von dem Lösungsmittel befreit. Hierzu kann die Polymerlösung entweder unter vermindertem Druck eingedampft oder durch Einblasen eines Inertgases von den flüchtigen Bestandteilen befreit werden. Das Eindampfen unter vermindertem Druck geschieht durch Entspannungsverdampfung, Schneckeneindampfung, Dünnschichtverdampfung, Fallfilmverdampfung, Sprühtrocknung, etc. Solche Verfahren sind von R. Erdmenger im «Maschinenmarkt», Bd. 80 (1974), Heft 1, Seite 2, und Heft 10, Seite 148 beschrieben.

Die erfindungsgemässen Formmassen zeigen im Vergleich zu Formmassen aus denselben Pfropfpolymerisaten und SAN-Copolymerisaten eine gute Fliessfähigkeit und ein unvermindert gutes Zähigkeitsniveau bei um mindestens 12°C erhöhter Wärmestandfestigkeit.

Die erfindungsgemässen Formmassen sind insbesondere dort von Vorteil, wo es auf hohe Wärmeformbeständigkeit, hohe Zähigkeit und leichte Verarbeitbarkeit ankommt. So können sie beispielsweise mit Vorteil zur Herstellung von Rohrleitungen, hochwertigen Dichtungen, Geschirr, heissdampfsterilisierbaren Geräten, Waschmaschinenteilen, Batteriekästen, Trockenbatteriegehäusen, Gehäusen und anderen isolierenden Teilen in elektrisch betriebenen Maschinen, von Elektroisolierfolien, verseifungsstabilen Behälterauskleidungen, chemisch und thermisch widerstandsfähigen Filtertüchern und vielen anderen Dingen verwendet werden.

In den folgenden Beispielen sind Teile Gewichtsteile und Prozente Gewichtsprozente.

(A) Pfropfpolymerisat auf Basis von Polybutadien

Die Herstellung des ABS-Pfropfpolymerisats geschieht durch Polymerisation von 37 Tln Styrol und 13 Tln Acrylnitril auf 50 Tle eines Polybutadiens (gem. den Angaben der DE-AS 1247665 und DE-AS 1269360 über eine Emulsionspolymerisation), wobei der mittlere Teilchendurchmesser der in Latexform vorliegenden Polybutadienpfropfgrundlage zwischen 0,2 und 0,4 μ liegt.

(B) Herstellung des Terpolymerisats aus Styrol, Acrylnitril und Maleinsäureanhydrid («SAMA-Copolymer»)

In ein ummanteltes Reaktionsgefäss, das versehen ist mit Blattrührer, Temperaturfühler, Einlass- und Auslassstutzen, werden 2000 Teile einer Mischung aus 7260 Teilen Styrol, 2200 Teilen Acrylnitril, 440 Teilen Maleinsäureanhydrid und 25 Teilen tert.-Dodecylmercaptan gefüllt. Dann wird der Reaktorinhalt auf 95°C erwärmt und bei dieser Temperatur die Polymerisation gestartet, wobei man die Mischung mit einem Durchsatz von 2000 Teilen pro Stunde dem Reaktor zuführt und gleichzeitig dieselbe Menge abführt. Der Initiator wird ebenfalls kontinuierlich dem Reaktor zugegeben: 0,6 Tle tert.-Butylperpivalat (75%ig in Dibutylphthalat) pro Stunde, so dass nach ca. 2 Std. eine Polymerlösung mit ca. 30% Feststoff entsteht. Die entnommene Lösung des Polymeren in den Monomeren wird mit 0,1 Gew.-% 2,6-di-tert.-Butyl-p-kresol versetzt und anschliessend auf einem Ausdampfextruder von den Monomeren und den flüchtigen Bestandteilen befreit.

Das SAMA-Copolymer enthält 17 Gew.-% Acrylnitril, 12 Gew.-% Maleinsäureanhydrid und 71 Gew.-% Styrol.

Die Grenzviskositätszahl beträgt $[\eta] = 0,7$ dl/g.
Die Monomeren-Verteilung in Fraktionen unterschiedlichen Molekulargewichts zeigt die folgende Tabelle:

| Fraktion Nr. | Gew.-% | $(\eta)$ | Gew.-% AN | Gew.-% MSA | Gew.-% Styrol |
|---|---|---|---|---|---|
| 1 | 4,21 | 1,28 | 18,0 | 12,3 | 69,7 |
| 2 | 7,25 | 1,09 | 18,6 | 12,7 | 68,7 |
| 3 | 19,16 | 0,96 | 17,2 | 12,9 | 69,9 |
| 4 | 9,73 | 0,86 | 18,6 | 11,9 | 69,5 |
| 5 | 11,14 | 0,77 | 18,4 | 12 | 69,6 |
| 6 | 11,52 | 0,64 | 18,0 | 11,5 | 70,5 |
| 7 | 11,91 | 0,52 | 16,5 | 12,0 | 71,5 |
| 8 | 26,75 | 0,50 | 13,5 | 12,1 | 74,4 |

Die Fraktionierung erfolgte aus Dimethylformamid mit Cyclohexan bei 78°C.

(C) Herstellung der Mischung

Die Komponenten werden in einem Innenkneter gemischt, als Stränge abgesponnen, granuliert und zu Prüfkörpern verspritzt. In Tabelle 1 sind die Mischungen des Pfropfpolymerisats (A) mit Copolymerisaten verschiedener Zusammensetzungen, die analog (B) hergestellt wurden, aufgeführt (Versuche 1–3). Im Vergleichsversuch 4 wird ein handelsübliches SAN-Copolymerisat aus 75 Gew.-% Styrol und 25 Gew.-% Acrylnitril mit einer Grenzviskositätszahl von 0,70 dl/g verwendet.

Tabelle 1

| Versuch | Mischungsverhältnis | | | Zusammensetzung | | | $a_n$ | | $a_k$ | | | Vicat | MFI |
|---|---|---|---|---|---|---|---|---|---|---|---|---|---|
| | Komp.(A) (Gew.-Tle) | Komp.(B) (Gew.-Tle) | Komp. (B) | S Gew.-% | A Gew.-% | MSA Gew.-% | 20°C kg/m² | −40°C kg/m² | 20°C | 0°C | −40°C | 0°C | 220°C/ 10kp |
| | | | a | 78 | 10 | 12 | 20 | – | 2 | – | – | 118 | 10,5 |
| | | | b | 71 | 17 | 12 | 20 | 21 | 1,3 | 1,6 | 1,6 | 119 | 15,4 |
| | | | c | 64 | 24 | 12 | 24 | – | 2 | – | – | 120 | 12 |
| | | | d | 75 | 25 | – | – | – | – | – | – | 99 | 22 |
| 1 | 35 | 65 | a | | | | 85 | 50 | 6,4 | 4,9 | 4,8 | 108 | 7,9 |
| 2 | 35 | 65 | b | | | | $(57)_9$ | 71 | 10,5 | 9,8 | 7,4 | 110 | 6,5 |
| 3 | 35 | 65 | c | | | | $(92)_3$ | $(86)_9$ | 14,5 | 12,6 | 8,5 | 110 | 6,8 |
| 4 | 35 | 65 | d | | | | $(87)_1$ | $(95)_6$ | 14,8 | 11,4 | 7,7 | 95 | 9,0 |

Komp. (A)  = Pfropfpolymerisat von Styrol und Acrylnitril auf Polybutadien gem. A
Komp. (B)  = Copolymerisat von Styrol, Acrylnitril und Maleinsäureanhydrid gem. B
S          = Styrol
A          = Acrylnitril
MSA    = Maleinsäureanhydrid
$a_n$       = Schlagzähigkeit nach DIN 53 453. Es wurden jeweils 10 Norm-Kleinstäbe geprüft. Wenn nicht alle Stäbe bei einer gegebenen Schlagbeanspruchung gebrochen sind, ist die Schlagbeanspruchung in Klammern gesetzt und die Anzahl der gebrochenen Stäbe dahinter angegeben.
ng      = nicht gebrochen
$a_k$       = Kerbschlagzähigkeit nach DIN 53 453
Vicat   = Wärmeformbeständigkeit nach Vicat B in °C
MFI    = Melt Flow Index nach DIN 53 755

**Patentanspruch**

Thermoplastische Formmassen aus
(A) 25–95 Gew.-% eines Pfropfpolymerisats von
70–30 Gew.-% eines Gemisches von Styrol
(95–50 Gew.-%) und Acrylnitril
(5–50 Gew.-%) auf
30–70 Gew.-% Polybutadien oder Butadien-Styrol-Copolymerisat, und
(B) 5–75 Gew.-% eines Terpolymerisats aus Acrylnitril, Maleinsäureanhydrid und Styrol, dadurch gekennzeichnet, dass das Terpolymerisat

10–30 Gew.-Teile Acrylnitril
7,5–15 Gew.-Teile Maleinsäureanhydrid
82,5–55 Gew.-Teile Styrol
einpolymerisiert enthält und durch kontinuierliche Massepolymerisation in einem ideal durchmischten Tankreaktor unter stationären Bedingungen und bei unvollständigen Umsätzen von 25 bis 60 Mol-%, bei Raumzeitausbeuten von 200 bis 2000 g/l und bei Temperaturen von 60–150°C in Gegenwart von 0,01 bis 0,5 Gew.-%, bezogen auf Monomere, eines in Radikale zerfallenen Initiators mit einer Zerfallsgeschwindigkeitskonstanten bei 100°C von grösser als $5\times10^{-3}$ sek.$^{-1}$ hergestellt und in einer weiteren kontinuierlich betriebenen Verfahrensstufe von den Restmonomeren bis auf einen Gehalt von unter 0,1 Gew.-%, bezogen auf das Terpolymerisat, befreit worden ist.

## Claim

Thermoplastic moulding compositions of
(A) 25 to 95% by weight of a graft polymer of
70 to 30% by weight of a mixture of styrene
(95 to 50% by weight) and acrylonitrile (5 to 50% by weight) on
30 to 70% by weight of polybutadiene or a butadiene-styrene copolymer, and
(B) 5 to 75% by weight of a terpolymer of acrylonitrile, maleic acid anhydride and styrene,
characterised in that the terpolymer contains
10 to 30 parts by weight of acrylonitrile,
7.5 to 15 parts by weight of maleic acid anhydride, and
82.5 to 55 parts by weight of styrene,
in copolymerised form and has been produced by continuous bulk polymerisation in an ideally mixed tank reactor under stationary conditions and with incomplete conversions of from 25 to 60 mole %, with volume time yields of from 200 to 2000 g/l and at temperatures of from 60 to 150°C in the presence of from 0.01 to 0.5% by weight, based on monomers, of an initiator decomposing into radicals with a decomposition rate constant at 100°C of greater than $5\times10^{-3}$ sec.$^{-1}$ and, in another continuous process step, has been freed from the residual monomers to a content of less than 0.1% by weight, based on the terpolymer.

## Revendication

Matières à mouler thermoplastiques constituées de
(A) 25 à 95% en poids d'un polymère greffé de
70 à 30% en poids d'un mélange de 95–50% en poids de styrène et 5–50% en poids d'acrylonitrile sur
30 à 70% en poids de polybutadiène ou d'un copolymère butadiène-styrène et
(B) 5 à 75% en poids d'un terpolymère d'acrylonitrile, anhydride maléique et styrène,
caractérisées en ce que le terpolymère contient, sous forme polymérisée, 10–30% en poids d'acrylonitrile, 7,5–15% en poids d'anhydride maléique et 82,5–55% en poids de styrène et a été préparé par polymérisation continue en masse dans un réacteur à brassage idéal dans des conditions stationnaires et à des taux de conversion incomplets de 25 à 60 moles %, avec des rendements spatiaux horaires de 200–2000 g/l et à des températures de 60–150°C en présence de 0,01 à 0,5% en poids, par rapport aux monomères, d'un initiateur se décomposant en radicaux et ayant une constante de vitesse de décomposition à 100°C de plus de $5.10^{-3}$ sec$^{-1}$ et a été débarrassé des monomères résiduels dans une étape supplémentaire en continu jusqu'à une teneur de moins de 0,1% en poids, par rapport au terpolymère.